Europäisches Patentamt

European Patent Office

Office européen des brevets

(11) Publication number: **0 363 158 B1**

# EUROPEAN PATENT SPECIFICATION

(45) Date of publication of patent specification: **08.03.95**   (51) Int. Cl.6: **B60G  17/015**

(21) Application number: **89310120.4**

(22) Date of filing: **03.10.89**

(54) **Electrically powered active suspension for a vehicle.**

(30) Priority: **05.10.88 US 253456**

(43) Date of publication of application:
**11.04.90 Bulletin  90/15**

(45) Publication of the grant of the patent:
**08.03.95 Bulletin  95/10**

(84) Designated Contracting States:
**DE FR GB**

(56) References cited:
**EP-A- 0 114 757
WO-A-89/00512
DE-U- 8 222 808
GB-A- 1 096 497
US-A- 3 468 555**

**PATENT ABSTRACTS OF JAPAN vol. 9, no. 183 (M-400)(1906) 30 July 1985,& JP-A-60 50013 (NISSAN JIDOSHA KK) 19 March 1985,**

(73) Proprietor: **FORD MOTOR COMPANY LIMITED
Eagle Way
Brentwood
Essex CM13 3BW (GB)**

(84) Designated Contracting States:
**GB**

(73) Proprietor: **FORD-WERKE AKTIENGESELL-
SCHAFT**

**D-50725 Köln (DE)**

(84) Designated Contracting States:
**DE**

(73) Proprietor: **FORD FRANCE S. A.
B.P. 307
F-92506 Rueil-Malmaison Cédex (FR)**

(84) Designated Contracting States:
**FR**

(72) Inventor: **Davis, Roy I.
9214 Abbey Lane
Ypsilanti
Michigan 48198 (US)**
Inventor: **Patil, Prabhakar B.
10294 W. Outer Drive
Detroit
Michigan 48223 (US)**

(74) Representative: **Messulam, Alec Moses et al
A. Messulam & Co.
24 Broadway
Leigh on Sea
Essex SS9 1BN (GB)**

## Description

This invention relates to an active suspension for a vehicle in which individual suspension units maintain an appropriate relationship between the roadwheels and the body of the vehicle through the use of forces generated by electric motors, with one of such motors positioned within each of the suspension units. As used herein, the terms "body" and "chassis" mean either a conventional unitized automotive body or a conventional frame and body automobile or any combination thereof.

For many years, vehicle suspensions, in general, and automotive suspensions, in particular, have been characterised by the use of spring elements and damping elements for controlling the motion of a vehicle body with respect to the roadwheels. Realising, however, the inflexibility of fixed rate damping and spring element systems, designers have sought to provide a variety of adaptive control systems in which spring rates, ride heights, and/or damping rates could be varied as a result of such criteria as road inputs, vehicle turning manoeuvres, vehicle loading, and other variables.

DE-U-8 222 808 discloses an inductive spring and shock-absorber system for a vehicle in the form of a linear electric motor in which the relatively movable elements, one carrying permanent magnets and the other a series of differentially wound electromagnetic coils, are connected between the chassis and a wheel assembly. Relative motion between the elements induces an electric current in the windings, and this current, and thus the damping characteristics of the system, can be controlled by varying the load in the circuit by electronic control means. The spring force can also be varied by varying a DC current passed through the windings. The system thus provides a passive response to relative movement between the wheel assembly and the chassis. For height regulation of the suspension a positive force can be created by passing a D.C. current through the windings, in this way the system is also able to provide an active suspension force between the wheel assembly and the chassis.

GB-A-1 096 497 discloses a wheel suspension system for a vehicle in which the height or attitude of the vehicle is varied to take account of the load by means of a screw jack forming part of the suspension and driven by an electric motor.

U.S. Patents 4,333,668; 4,506,909; 4,564,215; 4,635,959 and 4,673,194 all disclose unpowered or low-powered systems for varying damping rate in response to sensed vehicular operating conditions. Similarly, U.S. Patents 4,185,845; 4,466,625; 4,568,096 and 4,630,840 all disclose systems for adjusting or maintaining vehicle ride height in response to slow changes in vehicle load.

Although adaptive suspensions have allowed increased ride control by virtue of the ability to change the damping and spring rate characteristics of the suspension, such unpowered systems are generally incapable of counteracting force inputs rising from excitation of the roadwheel and tyre assembly by road surface imperfections as well as during turning, braking and acceleration manoeuvres. As a result, designers sought to implement so-called active suspensions capable of responding to road inputs in real time with power inputs having sufficient robustness to control body motion. As used herein, the term "active suspension" means a suspension which has frequency response and power output characteristics sufficient to respond in real time to control force inputs to the vehicle chassis arising from such sources as road imperfections, crosswinds, and vehicle turning manoeuvres.

Two examples of active suspensions are shown in U.S. Patents 4,625,993 and 4,639,013. The '993 patent discloses a system in which the suspension units include a double acting hydraulic actuator for maintaining the location of the roadwheel and tyre assembly versus the chassis of the vehicle. The '013 patent discloses a suspension unit in which a variable offset gas spring and a double acting hydraulic actuator are operated in parallel with each other. Both of these systems suffer from common shortcomings inasmuch as such hydraulically powered systems require complex piping and valve componentry. Further, in order to maintain a sufficient head of hydraulic energy for use at any given period of time, an engine driven pump must be continuously operated, thereby extracting energy from the vehicle engine which could otherwise be used to operate the vehicle, even at times when the pump output is not needed. Finally, such hydraulic systems generally are characterised by a high level of objectionable noise emissions.

The present invention seeks to provide an improved electrically powered active suspension for a vehicle in which an electrically driven assembly powered by an electric motor provides up to all of the force required for positioning a roadwheel with respect to the chassis of the vehicle. This object is achieved by means of the features defined in claim 1.

In one embodiment of the invention, the motor comprises a rotating electric motor having a rotating armature driving a gearset so that rotary motion of said armature will be converted into vertical movement of said roadwheel and tyre assembly with respect to said chassis.

The motor may comprise a permanent magnet motor, a variable reluctance motor, an induction motor, a synchronous motor, or other types of motors known to those skilled in the art and suggested by this disclosure.

In an alternative embodiment of the invention, the motor comprises a linear electric motor having a plunger and a stator interposed between said chassis and said wheel and tyre assembly so that sliding movement of said plunger with respect to said stator will be accompanied by vertical movement of said assembly with respect to said chassis.

The suspension unit may comprise first and second load bearing means interposed between said roadwheel and tyre assembly and the chassis of the vehicle, with said first means comprising said electric motor and said second load bearing means comprising a spring.

The invention will now be described further, by way of example, with reference to the accompanying drawings, in which:

Figure 1 is a perspective view of a vehicle having an electrically powered active suspension system, the figure showing only a portion of the system, but including the four suspension units;

Figure 2 is a partially schematic diagram of a suspension unit including both rotary electric powered and fluid powered load bearing means;

Figure 3 is a partially schematic diagram of a MacPherson strut suspension including both electrically powered and coil spring load bearing means;

Figure 4 is a partially schematic diagram of a suspension unit including both linear electric powered and fluid powered load bearing means;

Figure 5 comprises an overall system block diagram of an electrically powered active suspension;

Figures 6 and 6A comprise a schematic showing the power and control electronics incorporated into a system; and

Figure 7 comprises a graphic illustrating operation of a system in both power absorbing and regenerative modes.

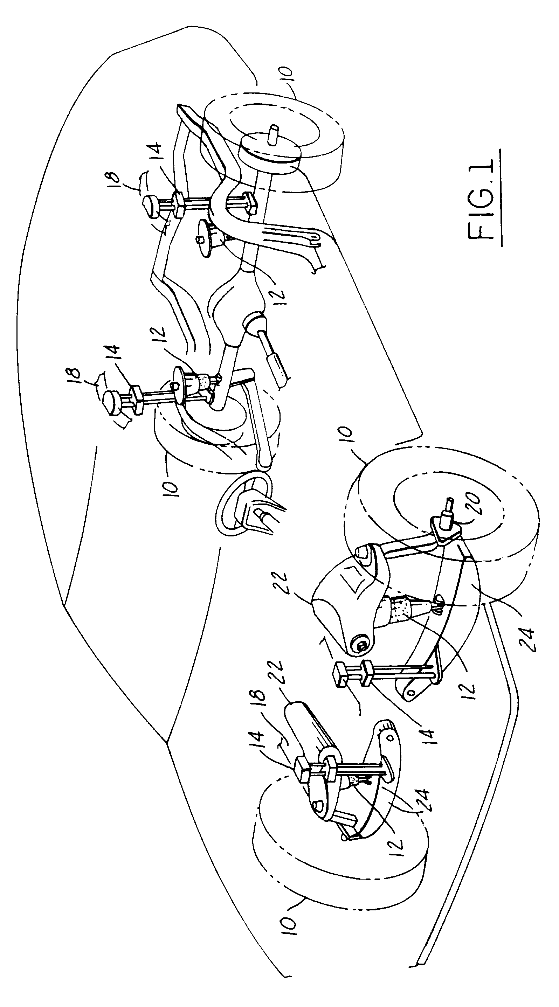

As shown in Figure 1, a vehicle having an electrically powered active suspension according to the present invention will generally be equipped with a plurality of roadwheel and tyre assemblies, 10, which are controlled by means of suspension units 12. As is further shown in Figure 1, each front suspension unit is mounted resiliently between chassis 18 and a lower control arm, 24. Roadwheel and tyre assembly 10 is journalled upon spindle 20, which is pivotally attached to the outboard ends of control arms 22 and 24. The inboard ends of the control arms are pivotally attached to chassis 18. Figure 1 further shows the placement of four LVDT units, 14, in proximity to each of roadwheels 10. The LVDT units comprise height sensing means interposed between chassis 18 and roadwheel and tyre assemblies 10 such that vertical motion of the roadwheel with respect to chassis 18 will be accompanied by motion of the sliding sensor components with respect to each other. In this manner, sensors 14 may be used to keep track of the vertical location of the roadwheel and tyre assemblies relative to the chassis of the vehicle. Other types of roadwheel vertical position sensors such as rotary Hall Effect or yet other types of linear or rotary resolver devices may alternatively be applied to a system according to the present invention. It will be further appreciated that a system according to the present invention could be employed not only with the parallel arm and MacPherson strut and beam axle combinations illustrated herein, but also with other types of suspensions.

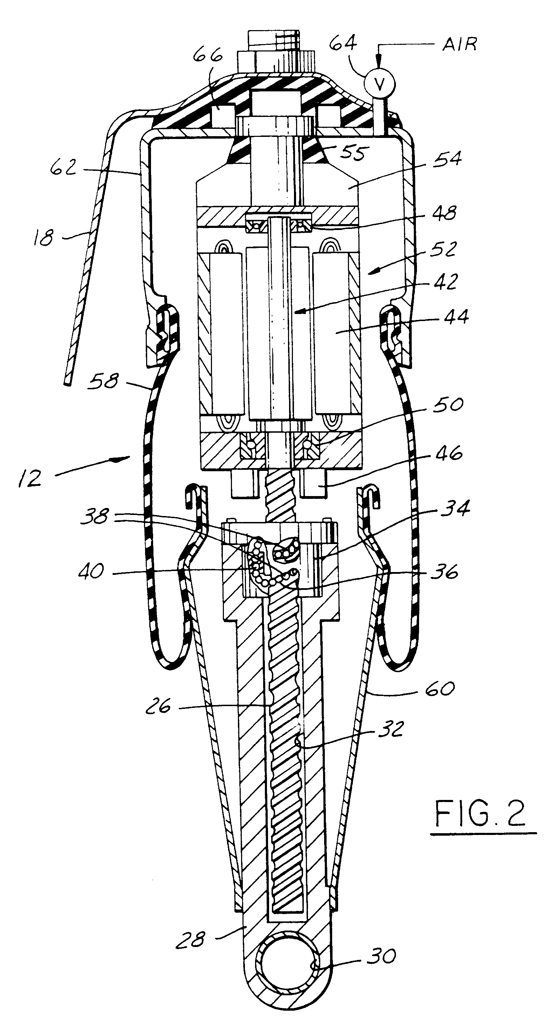

Figure 2 illustrates details of the electrically powered suspension unit shown in Figure 1. Beginning at the lower end of suspension unit 12, lower casing 28 has a mounting eye, 30, for attaching the suspension unit to lower control arm 24 as shown in Figure 1. Lower casing 28 contains a clearance bore, 32, providing a space for ball screw 26 to run longitudinally. Ball screw 26 interacts with ball nut 34, which has two ball passages 38 formed therein. A plurality of balls 36 circulates through passages 38 as well as through return passage 40. Details of a plural lead ball nut screw actuator suitable for practising the present invention are shown in U.S. patent 4,211,125, which is hereby incorporated by reference into this specification. It will be appreciated by those skilled in the arts to which this invention pertains that the ball nut and ball screw, co-operating together, form a channel which may be likened to the channel formed by the inner and outer races of a bearing, with the balls providing rolling contact between the ball screw and ball nut. Accordingly, when the ball screw is rotated, the length between the upper and lower portions of suspension unit 12 will be either increased or decreased. It will be further appreciated that other types of gear or screw drives may be useful for practising the present invention.

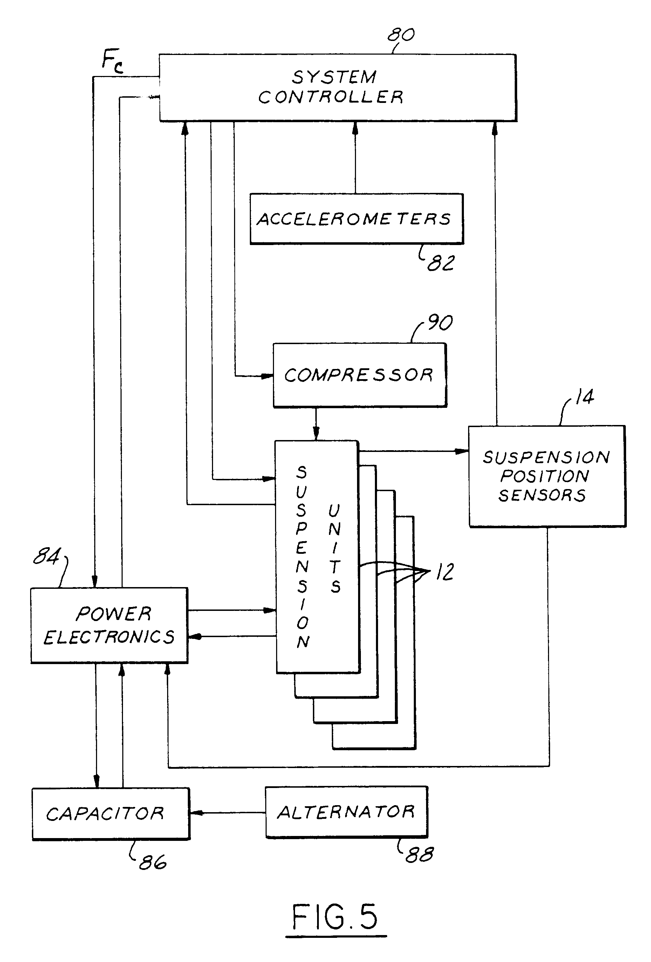

The ball screw of the suspension unit shown in Figure 2 is rigidly attached to armature 42 of an electric motor, 52, so that rotation of the motor will cause rotation of the ball screw and, concomitantly, extension or retraction of suspension unit 12. Armature 42 rotates in upper bearing 48 and lower bearing 50, which are shown as being of the angular contact type, but which could be configured according to other designs known to those skilled in the art and suggested by this disclosure. Motor stator 44 envelops a portion of armature 42 and is connected to power electronics 84 (Figure 5). The motor shown in Figure 2 is of the brushless type, having electronic commutation. Accordingly, optical encoder 46 is provided for advising power electronics circuit 84 of the precise rotary location of armature 42. Those skilled in the art will appreciate that other types of encoders or position resolvers may be employed for the purpose of providing position information needed for electronic commutation purposes. An example of a magnetic position encoder is the model EK500 encoder by Electro-Kinesis, Inc.™, a Superior Electric Company.

It has been determined that a General Electric ECM™ six pole surface permanent magnet motor using MQ-3 Nd-B-Fe magnets may be useful for practising the present invention. As previously noted, the present invention may be practised with permanent magnet, induction, variable reluctance, or synchronous motors, or yet other types of motors suggested by this disclosure. These motors may employ a variety of architectures. For example, although the synchronous motor and one variety of the induction motor will employ a wound stator and a wound rotor for both the rotary and linear embodiments, either component of the permanent magnet motors may be wound, as may either component of the variable reluctance motor. With the variable reluctance motor, the winding is opposed by a slot/tooth element comprising the rotor or stator. Finally, the induction motor may comprise not only fully wound designs but also designs in which the stator is wound and the rotor or plunger comprises a known squirrel cage element.

The load carrying force produced by motor 52 via the ball nut and screw combination is sensed by motor load cell 54, which is mounted between the end case of the motor and the upper portion of suspension unit 12. Load cell 54 bears upon isolator 55, which is interposed between chassis 18 and motor load cell 54.

The suspension unit of Figure 2 has not only an electrically powered load bearing means but also a fluid powered load bearing means comprising a fluid spring mounted about the motor and gearset. The fluid spring comprises rolling lobe airspring 58, which interacts with piston 60, which is in turn attached to the lower end of lower casing 28. The upper end of rolling lobe air spring 58 is attached to upper housing 62. Load bearing forces generated by air spring 58 are thus transmitted into the lower casing 28 and upper housing 62. The amount of such force is sensed by means of pneumatic spring load cell 66, which is interposed between upper housing 62 and chassis 18. Thus, it will be understood that the two load cells 54 and 66, which are connected to system controller 80 (Figure 5), allow system controller 80 to determine the load carrying forces generated by the pneumatic and electric devices so that the fraction of the total load which is carried by each of the load bearing means may be adjusted. Alternatively, means may be provided for monitoring the control currents supplied to the electric motor and combined with means for converting such currents into a signal having a value which is proportional to the force exerted by said motor.

The load carrying force exerted by airspring 58 is proportional to the pressure of air contained within the airspring. Accordingly, the airspring is provided with air through valve 64 which is in turn connected with air compressor 90 (Figure 5).

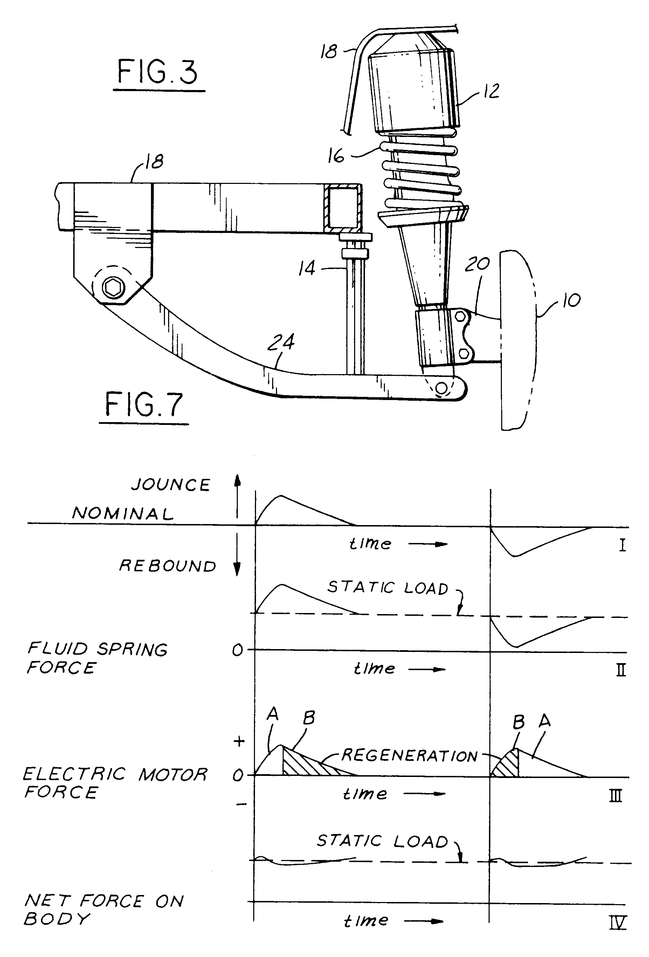

Figure 3 illustrates an alternate construction for the strut portion of a suspension system according to the present invention. Figure 3 illustrates the well-known MacPherson construction in which the lower end of suspension unit 12 is rigidly attached to spindle 20 upon which roadwheel and tyre assembly 10 is journalled. Control arm 24 is pivotally attached between suspension unit 12 and chassis 18. The suspension unit of Figure 3 has a coil spring, 16, mounted about the electrically powered portion of the strut, which may comprise either a rotary or a linear electric motor as described herein. It is possible to apportion the load between the coil spring and the motor driven unit by changing the ride height of the vehicle.

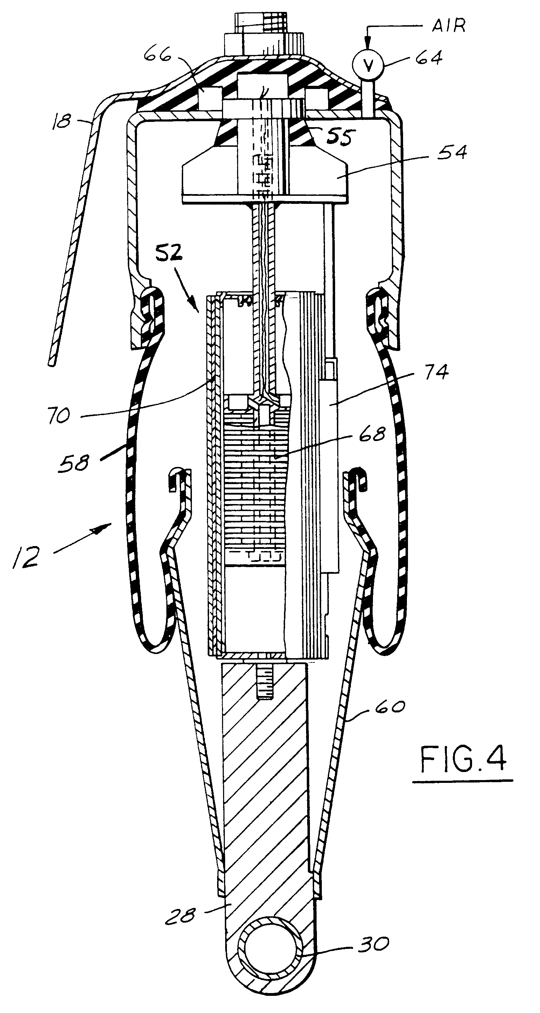

Figure 4 illustrates a linear motor incorporated into a suspension unit according to the present invention. Several of the reference numerals in Figure 4 correspond to like structures in Figure 2. The motor shown is an induction motor in which only plunger 68 is wound, with hollow stator 70 comprising a conductive metallic structure which carries induced currents. Force in an induction motor is caused by the interaction between an applied magnetic field in one member (in this case, the plunger), and currents induced in the conductor of a second member on the other side of a separating air gap. Plunger 68 is attached at its upper extremity to chassis 18 and comprises lamination packs, steel coils, magnet wire coils, end caps, and a shaft. The plunger is slidably carried within stator 70, which is attached to mounting eye 30, and which comprises a bimetallic tube, having an aluminium inner surface and a steel outer surface. The two sleeves are assembled and then the inner bore is honed for straightness. The suspension unit of Figure 4 further includes resolver 74, which keeps track of the position of the motor for commutation purposes. As with the unit illustrated in Figure 2, an air spring, 58, is included, as is valve 64 for admitting compressed air into the air spring.

The suspension unit shown in Figure 4 may be integrated in the suspension shown in Figure 1 by substituting the linear device of Figure 4 for the rotary motor powered device of Figure 2. The plunger and resolver are each wired to system controller 80 and power electronics module 84. The linear and rotary motor embodiments disclosed herein may both be controlled according to a scheme set forth below.

Operation of a system according to the present invention will be explained with reference to Figures 5, 6, and 7. As shown in Figure 5, system controller 80 communicates with and is operatively connected with several of the other components of a system according to this invention. Accordingly, system controller 80 is interconnected with power electronics module 84, as well as with suspension units 12, accelerometers 82, height sensors 14, and air compressor 90. Those skilled in the art will appreciate in view of this disclosure that air compressor 90 and rolling lobe airspring 58 are merely intended to be exemplary of a class of devices comprising fluid power units. Other types of such units could be used in a system according to the present invention, including but not limited to hydro-pneumatic, or even low-powered hydraulic devices.

System controller 80 comprises a microprocessor controller and appropriate input and output devices including analog to digital and digital to analog converters. The microprocessor preferably comprises a read only memory (ROM) for storing various constants and control programs for controlling the suspension system. The microprocessor further includes a central processing unit (CPU) for reading out control programs from the ROM so as to execute required operations, and a random access memory (RAM), which temporarily stores various data related to the operations to be executed within the CPU, and which allows the CPU to read out the data stored therein. The microprocessor further includes a clock generator which generates clock pulses in response to which the operations are executed in the microprocessor. Those skilled in the art will appreciate in view of this disclosure that the present invention may be practised with the aid of several different types of microprocessors manufactured by several different companies.

At least one of the control programs stored within the ROM of system controller 80 comprises an outer loop control for determining the desired force from each suspension unit. Using information from the accelerometers, height sensors, and other vehicular sensors, the outer loop will calculate a desired force, $F_c$, for each suspension unit. As an example, the force may be determined as that force which is composed of the following terms:

$$F_c = k_1 x_1 + k_2 x_2 + k_3 x_3 + k_4 x_4 + k_5 x_5$$

where:

$x_1$-$x_5$ are non-dimensional representations of the vertical acceleration of the vehicle body or chassis: tyre deflection; the distance between the suspension jounce stops; and chassis pitch and roll, respectively; and

$k_1$-$k_5$ are weighting factors having values which can either be fixed or changeable with the operating mode of the vehicle. For example, on a smooth road with straight line driving, it may be desirable to set $k_1 = 1$ and each of $k_2$-$k_5 = 0$ in order to give the best possible ride.

Figure 7 shows various plots characterising operation of a system according to the present invention. Each of the plots in Figure 7 has been marked with an identification numeral in the range I-IV. Each of the plots is divided into a right and left section. The left sections correspond to a situation in which the roadwheel comes into contact with a bump protruding from the roadway surface. The right sections correspond to a situation in which the roadwheel initially falls into a depression such as a pothole, and then runs up out of the depression.

Plot I illustrates roadwheel position, with the ordinate designating the ride height position. Accordingly, the ordinate is marked "jounce" to indicate movement of the roadwheel up into the chassis, and "rebound" to indicate movement of the roadwheel away from the chassis. In the event that the roadwheel strikes an obstacle extending above the normal elevation of the roadway--e.g., a parking lot bumper, the wheel will move upwardly i.e., in the jounce direction, so as to move closer to the chassis. This is shown in the left portion of I of Figure 7. Upward movement of the wheel will be accompanied by an increase in the load carrying force generated by fluid spring 58. This is shown in the left portion of plot II of Figure 7. Note that the static load borne by air spring 58 is shown as an offset from the abscissa of plot II. As is noted by plot II, the fluid spring force generally follows wheel position. It has thus been assumed that force generated by air spring 58 is a linear function of the relative displacement between roadwheel 10 and chassis 18. To the extent that this is not the case with any particular air spring, plot II would merely have a different characteristic. The left portion of Figure 7 labelled III illustrates the electric motor force produced by a suspension unit according to present invention. Note that the force begins at a zero level at the abscissa. Accordingly, fluid spring 58 is being employed for the purpose of carrying the relatively invariant load component supported by the suspension. In other words, the static load which must be supported by the suspension units is being supported by air spring 58. This allows the electrically powered portion of suspension unit 12 to handle only the relatively variant portion of the load imposed upon the suspension units. Accordingly, plot III shows that electric motor force starts at the abscissa at zero force and builds along with the force build-up in air spring 58. Conversely, as the force build-up within airspring 58 decreases to the static load condition, the electric motor force decreases concomitantly. As is further shown in the left portion of plot III of Figure 7, the region under this plot illustrates energy absorbed by the motor of the suspension unit and energy supplied by the motor of the suspension unit to the electrical power source when the motor is operating in the regenerative mode.

It will be noted that in the region labelled "A" of the left segment of plot III, power is being absorbed from the electrical power source by the motor and converted to mechanical work. This occurs because the force being generated by the motor and the motion of the motor are in the same direction. In other words, in the region of the curve labelled "A", the motor is being used to pull the roadwheel and tyre assembly up against both the force of air spring 58 and the force of gravity. Conversely, in the region labelled "B" of the left portion of III, the motor is being used to oppose both the force of spring 58 and the force of gravity tending to push the road wheel downwards. In other words, the motor is being operated as a generator to convert the energy which was stored in airspring 58 and in gravitational potential energy when the wheel moved in the jounce direction into electrical energy which may be either used immediately or stored for future use. This conversion of energy stored in the spring comprises the essence of regenerative operation for this embodiment of the present invention. In the event that only an electrically powered device is used in the suspension unit, the weight of the roadwheel and tyre assembly and the weight of the hardware which attaches the roadwheel to the suspension unit will provide a downwardly directed force which may be utilised to remove energy from the suspension system regeneratively. It will be appreciated that the total amount of energy which is available for removal regeneratively will generally not equal the total energy put into the system by the electric motor because of losses arising from friction, inertia, and electrical transmission losses. It should be noted that the areas identified under plot III cannot be correlated to the amount of energy transferred by means of the suspension unit because the abscissa of plot III corresponds to time and not displacement. Nevertheless, plot III does indicate the magnitude and direction of the forces being exerted by the motorised part of the suspension unit.

Plot IV of the left portion of Figure 7 illustrates the net force on the vehicle's body or chassis resulting from operation of suspension unit 12 during the roadwheel's encounter with an object in the roadway. Note that the force line is almost flat, indicating that an almost constant force, approaching the static force required to support the vehicle, acts upon the vehicle body. As a result, the occupants of the vehicle will enjoy a smooth ride free from undesirable road inputs.

As described above, the right portion of Figure 7 illustrates an example wherein the roadwheel falls into a depression in the roadway surface. Accordingly, plot I shows the roadwheel moving in the rebound direction and then back up into the nominal ride height position. The force developed by airspring 58 tracks the ride height excursion (plot II). As before, electric motor force is shown in plot III. Note however, that the portions of plot III showing energy absorbing and regenerative operation are reversed in the left and right portions. This phenomenon occurs because as the roadwheel moves downwardly into the hole, the motor exerts a force in the upward direction; as a result, the motor is driven regeneratively. When the roadwheel starts to move upwardly once the end of the hole has been reached, the motor will pull the roadwheel upwardly so as to avoid putting force into the chassis. This corresponds to the "A", or energy absorption part of the curve shown in the right part of plot III. Finally, the net force plot for the present example indicates that very little force has been imparted to the body.

Turning now to Figure 5, in the event that the roadwheel and tyre assembly strike an obstruction corresponding to the left portion of Figure 7, system controller 80 will measure a force increase by means of motor load cell 54 and pneumatic spring cell 66. In other words, the load cells will sense greater forces acting upon the chassis, with the forces being transmitted by the pneumatic and electric load bearing devices. Upon sensing increased loading, system controller 80 will give a command to power electronics module 84 to actuate suspension units 12 so as to counteract the force build-up produced within fluid spring 58 by lifting the roadwheel. Power will then be supplied to the suspension units by means of capacitor 86 which is operatively connected with power electronics module 84 (Figure 5) and which is in turn supplied with power by means of alternator 88 which is driven by the engine of the vehicle. Alternatively, the output of alternator 88 could be augmented by means of a storage battery. In the event that the vehicle does not possess an engine, alternator 88 could be replaced entirely by means of a storage battery. Although capacitor 86 has been shown as comprising a single unit, for certain applications of a system according to the present invention it may be desirable to use a plurality of high volumetric efficiency capacitors, with one such capacitor located in proximity to each suspension unit.

System controller 80 will be able to determine the relatively variant and relatively invariant components of the loads imposed upon suspension units 12 by tracking the load magnitude as a function of time. Once the invariant fraction of the load has been resolved, air spring 58 may be commanded to produce this portion of the load, thereby freeing the electric motor for the task of handling dynamic suspension loads.

If the load upon air spring 58 is increased as in plot II of Figure 7, system controller 80 will give a signal to power electronics module 84 to cause the electric motor of the strut to counteract such force. A force command will be given to suspension unit 12, subject to feedback from height sensors 14 that an insufficient amount of stroke remains in the suspension unit. Thus, if height sensors 14 indicate that the suspension unit is coming into the full jounce position, system controller 80 will give an artificial jounce bumper command to power electronics 84 so as to greatly decrease the amount of force developed by the motor, thereby preventing the suspension unit from crashing into the full jounce position.

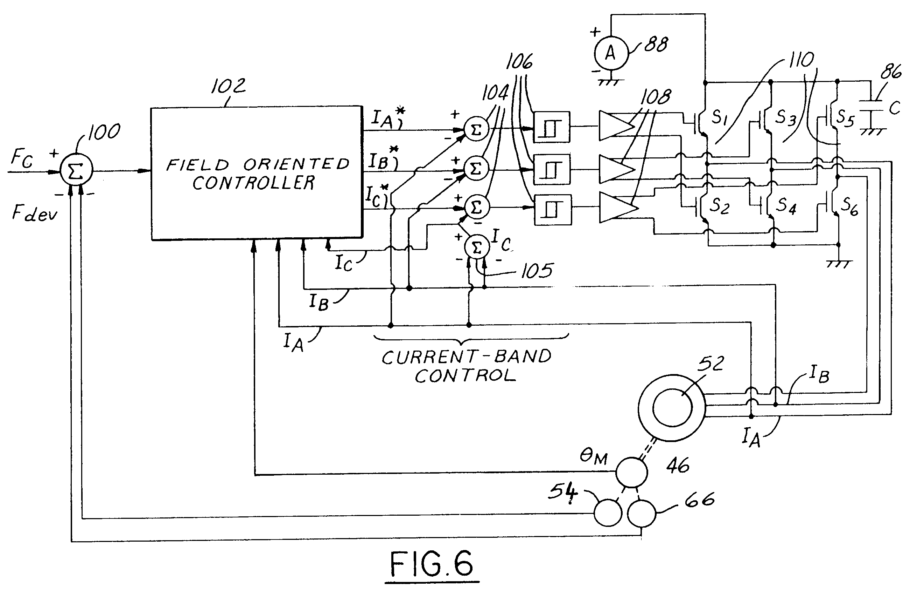

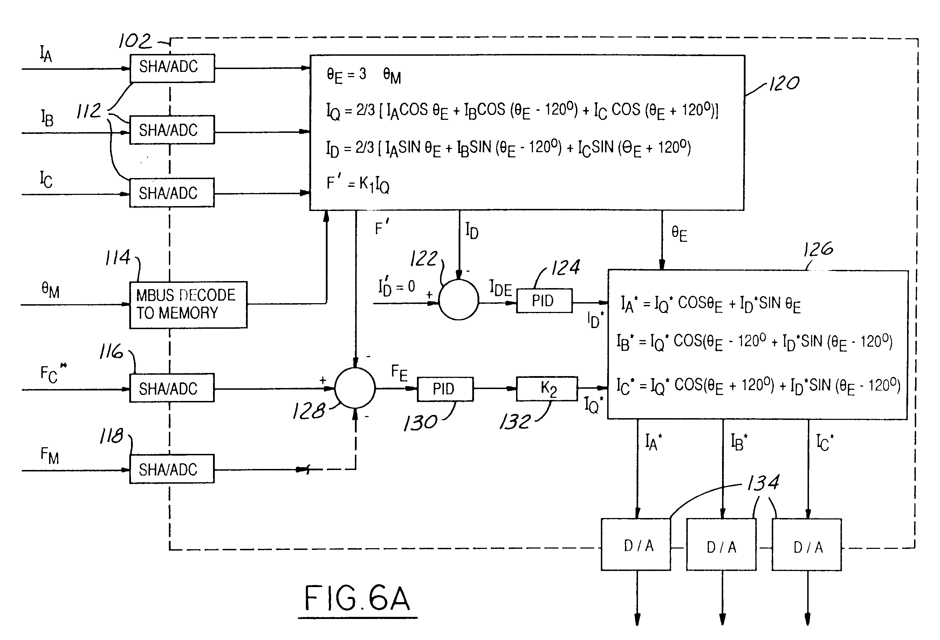

From the foregoing explanation, it will be understood that the system controller functions not only as a load apportionment means, responsive to the load cells and height sensors, for determining the relatively variant and relatively invariant components of the loads, but also as means for adjusting the fraction of the total load carried by each of the load bearing components of the strut. As will be explained more fully in connection with Figure 6, system controller 80 and power electronics module 84 together comprise means for producing force commands corresponding to the forces to be produced by each of the load bearing means and comparator means for comparing the commanded forces with the actual forces sensed by the load cells so as to produce an error signal which is then used to recalculate new force commands so as to cause the actual forces produced by the suspension unit to equal the commanded forces. The system controller may apply a proportional-integral-derivative (PID) type of control to the error signal to transform the error signal into a corrected force signal. The well-known PID control method generates an output signal which is proportional to the magnitude of the error signal and to its time derivative and time integral. The PID control method represents but one of several different control schemes which could be employed with a system according to the present invention.

The relatively invariant portion of the vehicle load imposed upon any particular suspension unit 12 will normally be borne by means of air spring 58. This is accomplished whenever system controller 80 either signals air compressor 90 to supply air by means of valve 64 to air spring 58, or to bleed air from air spring 58 so as to bring the ride height within the nominal setting. Accordingly, the electrically powered portion of suspension unit 12 will not be relied upon to provide what is analogously to electronic theory, the "DC" portion of the load.

In the event that, notwithstanding the precise load carrying characteristics of a suspension unit according to the present invention, the vehicle has a vertical velocity detectable by means of one or more of accelerometers 82, (Figure 5), a modified control scheme will be employed for the purpose of damping such vertical motion of the chassis. This modified algorithm will operate by causing suspension units 12 to exert forces on the body which are in the opposite direction of the body velocity at any given moment. In other words, if the body is moving in the downward direction, the suspension units will be commanded to exert a force in an upward direction so as to damp the body movement.

Figure 6 illustrates certain details of a power electronics module useful for implementing a system according to the present invention. Figure 6A illustrates additional details of the structure of Figure 6, including the structure of the field oriented controller contained in Figure 6.

Returning for the moment to Figure 5, it is seen that power electronics module 84 receives force commands, $F_c$, from system controller 80. The power electronics module is given the task of supplying the correct phase currents to motor 52, so as to produce the forces specified by system controller 80.

Turning to Figure 6, summer or comparator 100 marks the point at which command force, $F_c$, which is the commanded force from system controller 80, is added to or in other words, compared with $F_{dev}$. As shown in Figure 6, $F_{dev}$ is the measured force output derived from load cells 54 and 66 or derived in part by the system controller, using motor current information. The output of comparator 100 is sent to field oriented controller 102, which will be described in detail with reference to Figure 6A. The purpose of field oriented controller 102 is to calculate appropriate phase currents to feed to each of the three phase legs 110 which supply the phase currents to motor 52.

In addition to the previously described inputs, field oriented controller 102 also receives data from rotor position sensor 46, which in this case comprises the previously described optical encoder. Finally, field oriented controller 102 senses the currents in the individual motor windings. Although only the currents $I_A$ and $I_B$ are shown as being sensed directly, with the third current, $I_C$, being derived from currents $I_A$ and $I_B$ by comparator 105 as the negative of the sum of $I_A$ and $I_B$, those skilled in the art will appreciate in view of this disclosure that is possible to directly measure all three of the phase currents as an alternative to the use of comparator or summer 105.

Field oriented controller 102 calculates the desired phase currents $I_A^*$, $I_B^*$, and $I_C^*$. These idealised phase currents are compared by means of comparators 104 to each of the measured phase currents $I_A$, $I_B$, and $I_C$ respectively. The error for each current is then fed to current mode controllers 106. The function of the current mode controllers is to switch phase currents on and off, provided a predetermined hysteretic current level has been satisfied. It has been determined that model CS320 current mode controllers by Cherry Semiconductor will be useful as device 106. The outputs of the current mode controllers are fed to drivers 108, which supply gate charges for the purpose of switching transistors S1-S6.

Transistors S1 and S2, S3 and S4, S5 and S6, which are labelled 110 in Figure 6, comprise, respectively, phase legs for supplying three separate phase currents to motor 52. Each of transistors S1-S6 comprises an insulated gate bipolar transistor (IGBT). Those skilled in the art will appreciate that other types of semiconductor devices such as MOSFET or MCT devices could be employed in lieu of the illustrated IGBT units. It has been determined that pairs of IGBTs supplied as phase leg modules by MOSBLOC, Inc. in their Motor Drive Series, will be useful for implementing a circuit according to present invention. The outputs of the phase leg modules are fed directly to motor 52.

Turning now to Figure 6A, the dotted area of the figure which is labelled 102 and which corresponds to the field oriented controller, comprises a digital computer. It has been determined that a Ford Motor Company EEC-IV controller, which utilises an Intel model 8061 microprocessor, will be useful for practising the present invention. Phase currents $I_A$, $I_B$ and $I_C$ are shown as entering field oriented controller 102 at combination sample and hold amplifier and analog to digital converters (SHA/ADC) 112. The digital equivalents of the phase currents are used at block 120 of Figure 6A in various equations for calculating $I_Q$ and $I_D$, which are the quadrature and direct axis equivalent currents for motor 52. $I_Q$ is used further for calculating F', which is the estimated developed force. The equation for F' is shown in block 120. As an alternative to calculating F', the measured force from the load cells may be entered by means of SHA/ADC 118.

The equation calculation block shown at 120 in Figure 6A receives further inputs from optical encoder 46 or another type of motor position sensor in the form of $\theta_E$ which is fed to MBUS decoder device 114. Finally, force commands from system controller 80 are fed into calculational scheme by means of SHA/ADC 116.

As set forth in block 120, the computer calculates $r_E$ which is the electrical rotor angle corresponding to the mechanical rotor angle, $\theta_E$, as well as $I_Q$, $I_D$, and F', which have previously been discussed.

Having made the calculations in block 120, computer compares $I_D$ to $I_{D'}$, which is set equal to zero by means of comparator 122, but only in the event that motor 52, in the rotating embodiment illustrated in Figure 2, is a permanent magnet motor. $I_{D'}$ could be non-zero for implementations such as with a linear induction motor. The result of the comparison, $I_{DE}$, is then modified by PID controller 124. This controller essentially comprises an integrator and a proportional multiplier. The desired current $I_D^*$ is the output of PID controller 124. In an ideal situation it would be possible to perform the current comparison and tracking without using a PID compensator. However, due to finite non-zero time constants involved in motor 52, the response to the phase currents is not instantaneous and the PID utilises the error so as to enhance the responsiveness of the system. In similar fashion, the estimated developed force F' is compared to the force command by comparator 128 and the error is fed through PID 130 and then converted to $I_Q^*$ by means of a multiplication operation at block 132. Those skilled in the art will appreciate that PID 124 and PID 130 could be supplanted by other types of control strategies known in the art and suggested by this disclosure. At block 126, a reverse transformation process translates $I_D^*$ and $I_Q^*$ into desired line currents $I_A^*$, $I_B^*$ and $I_C^*$. Finally, digital to analog converters 134 are employed for converting digital signals $I_A^*$, $I_B^*$ and $I_C^*$ into analog signals for feeding to comparators or summers 104 (Figure 6).

As noted in Figure 6, the combination of comparators 104 and current mode controllers 106 comprise a current band or hysteresis controller relying on the feedback of the three stator currents to minimise introduction of DC currents in the motor. This will minimise torque pulsation in the suspension unit.

From the foregoing, it is seen that a system according to present invention senses the load carrying force produced by each of the load bearing means employed therein, and determines force commands by maintaining the sum of the load carrying forces produced by the load bearing means at a value having a magnitude approximating that of the relatively invariant load component. These force commands will be distributed to various suspension units so that the desired load forces may be developed.

The preferred embodiments of the invention offers various advantages, amongst which are the following:

1. The electrically powered active suspension does not require the input of significant power while operating in a standby mode.

2. The electrically powered active suspension consumes less power than a hydraulic system of comparable output because the conversion of electrical energy to mechanical energy by the suspension units described herein will be more efficient than the conversion of hydraulic energy to mechanical energy by known hydraulic active suspension systems.

3. The electrically powered active suspension permits regenerative operation in which mechanical energy is converted to electrical energy and returned to the electrical energy source, thereby further improving efficiency.

4. The active suspension does not exhibit the unfavourable noise, vibration and harshness characteristics commonly found with hydraulically powered active suspension systems.

5. The active suspension is more amenable to computer control of the suspension system, which will help to control the power load demands placed by this system upon the vehicle engine or other prime mover.

6. The active suspension has lower system weight than a hydraulically powered system of similar capacity.

7. The very low system response times will permit much flexibility in tuning the system to a particular vehicle.

Various modifications will no doubt occur to those skilled in the arts to which this invention pertains. For example, certain functions of the microprocessors described herein could be performed by conventional switching circuits or other conventional control devices. Further, the choice of a particular suspension in which to employ a system according to present invention is left to the individual designer.

**Claims**

1. An electrically powered active suspension for a vehicle, comprising:

a roadwheel and tyre assembly (10);

an electrically powered suspension unit (12) operative to produce a force between said assembly and the chassis (18) of the vehicle in response to external force inputs acting on said assembly and said chassis, said unit comprising first and second load bearing means interposed between said assembly and said chassis, said first load bearing means comprising an electric motor (52) for positioning said assembly with respect to said chassis and said second load bearing means comprising a spring (16, 58);

means (54, 66) for sensing external forces acting to cause vertical movement of said assembly relative to said chassis, said sensing means comprising load sensing means (54, 66) for sensing the load carrying forces generated by each of said load bearing means (52; 16, 58) and for generating signals corresponding to said forces;

height sensing means (14) for determining the ride height of said vehicle corresponding to the vertical distance separating said roadwheel and said chassis and for generating a height signal corresponding to such ride height; and

control means (80) for operating said electric motor to control said unit to respond in real time to said external force inputs from sensing means (54, 66) while the vehicle is in motion and thereby control the vertical movement of said wheel and tyre assembly with respect to said chassis;

said control means also comprising load apportionment means, responsive to said load and height sensing means, for determining the relatively variant and relatively invariant components of said loads and for adjusting the fraction of the total load which is carried by each of said load bearing means.

2. A suspension according to claim 1, wherein said motor comprises a rotating electric motor having a rotating armature (42) driving a gearset (26, 34) so that rotary motion of said armature will be converted into vertical motion of said roadwheel and tyre assembly with respect to said chassis.

3. A suspension according to claim 1, wherein said motor comprises a linear electric motor operated by said control means and having a plunger (68) and a stator (70) interposed between said chassis and said wheel and tyre assembly so that sliding movement of said plunger with respect to said stator will be accompanied by vertical movement of said assembly with respect to said chassis.

4. A suspension according to claim 3, wherein said plunger (68) is operatively connected with said chassis and said stator (70) is operatively connected with said wheel and tyre assembly.

5. A suspension according to any preceding claim, wherein said spring is a fluid spring (58) mounted about said motor.

6. A suspension according to any preceding claim, further comprising a source of electrical energy (88) connected with said control means (80) and with said electric motor so that said energy source will both supply energy to said electric motor and absorb energy therefrom.

7. A suspension according to any preceding claim, wherein said load apportionment means comprises means (84) for producing force commands corresponding to the forces to be produced by each of said load bearing means, comparator means for comparing said commanded forces with the actual forces produced by said load bearing means and for producing an error signal from said comparison, and adjustment means for adjusting said force commands so that said force commands may be adjusted to cause said actual forces to equal said commanded forces.

8. A suspension according to Claim 7, wherein said adjustment means comprises means for producing a desired force signal by transforming said error signal into a signal having components which are proportional to the magnitude of said error signal and to its time derivative and time integral.

9. A suspension according to Claim 7 or 8, with said load apportionment means further comprising means responsive to said height signals for determining the vertical velocity of said chassis and means for directing said first load bearing means to operate as a generator supplying energy to said energy source in the event that the direction of said force command and the direction of said vertical velocity are opposite, but directing said first load bearing means to operate as a motor in the event that the directions of said velocity and said force command are the same.

10. A suspension according to Claim 7, wherein said load apportionment means produces said force commands such that the sum of the forces produced by a plurality of suspension units employing said load bearing means will be approximately the same as the relatively invariant component of the load which is required to maintain a desired vehicle attitude.

## Patentansprüche

1. Elektrisch gespeiste aktive Feder-/Dämpfereinheit für ein Kraftfahrzeug, die besteht aus:
   einer Rad-/Reifeneinheit (10)
   einer elektrisch gespeisten Feder-/Dämpfereinheit (12),
   die eine Kraft zwischen genannter Einheit und dem Fahrwerk (18) des Kraftfahrzeugs erzeugt als Reaktion auf externe Krafteinwirkungen auf genannte Einheit und genanntes Fahrwerk, wobei genannte Einheit eine erste und eine zweite lasttragende Vorrichtung enthält, die zwischen genannter Einheit und genanntem Fahrwerk positioniert sind, wobei genannte erste lasttragende Vorrichtung zur Positionierung genannter Einheit bezogen auf genanntes Fahrwerk einen Elektromotor (52) enthält und genannte zweite lasttragende Vorrichtung eine Feder (16, 58) enthält;

   Vorrichtungen (54, 66) zur Erfassung externer Kräfte, die eine vertikale Bewegung genannter Einheit bezogen auf genanntes Fahrwerk hervorrufen, wobei genannte Meßvorrichtungen Lastmeßvorrichtungen (54, 66) zur Erfassung der lastaufnehmenden Kräfte enthalten, die die einzelnen lasttragenden Vorrichtungen (52, 16, 58) erzeugen, sowie zur Erzeugung von Signalen, die genannten Kräften ensprechen;

   Höhensensor (14) zur Bestimmung der Fahrhöhe des genannten Kraftfahrzeugs, die dem vertikalen Abstand zwischen genanntem Rad und genanntem Fahrwerk entspricht, und zur Erzeugung eines Höhensignals, welches solch einer Fahrhöhe entspricht; und

   Regelvorrichtung 80 für den Betrieb genannten Elektromotors zur Regelung genannter Einheit, um in Echtzeit auf genannte externe, von Meßvorrichtungen (54, 66) erfaßte Kraftdaten zu reagieren, während das Kraftfahrzeug in Bewegung ist, und auf diese Weise die vertikale Bewegung der genannten Rad-/Reifeneinheit bezogen auf das Fahrwerk zu regeln;

   genannter Regelvorrichtung, die ebenfalls auf genannte Last- und Höhensensoren ansprechende Lastzuteilungsvorrichtung zur Bestimmung der relativ variablen und relativ invariablen Bestandteile genannter Lasten enthält sowie zur Regulierung des Teils der Gesamtlast, welchen die genannten einzelnen lasttragenden Vorrichtungen aufnehmen.

2. Feder-/Dämpfereinheit nach Anspruch 1, in welcher genannter Elektromotor ein elektrischer Umlaufmotor mit einem Drehanker (42) ist, der ein Sammelgetriebe (26, 34) antreibt, so daß eine Rotationsbewegung des genannten Ankers in eine vertikale Bewegung genannter Rad-/Reifeneinheit bezogen auf das Fahrwerk umgewandelt wird.

3. Feder-/Dämpfereinheit nach Anspruch 1, in welcher genannter Elektromotor ein linearer Elektromotor ist, der von genannter Regelvorrichtung betrieben wird und dessen Tauchanker (68) und Stator (70) zwischen genanntem Fahrwerk und genannter Rad-/Reifeneinheit positioniert sind, so daß eine Gleitbewegung des genannten Tauchankers bezogen auf genannten Stator von einer vertikalen Bewegung der genannten Einheit bezogen auf genanntes Fahrwerk begleitet wird.

4. Feder-/Dämpfereinheit nach Anspruch 1, in welcher genannter Tauchanker (68) wirksam mit genanntem Fahrwerk und genannter Stator (70) wirksam mit genannter Rad-/Reifeneinheit verbunden ist.

5. Feder-/Dämpfereinheit nach einem vorhergehenden Anspruch, in welcher genannte Feder eine um genannten Motor befestigte Fluidfeder (58) ist.

6. Feder-/Dämpfereinheit nach einem vorhergehenden Anspruch, welche darüber hinaus eine elektrische Energiequelle (88) enthält, die mit genannter Regelvorrichtung (80) und mit genanntem Elektromotor verbunden ist, so daß genannte Energiequelle an genannten Elektromotor sowohl Energie liefern als auch auch von dort Energie absorbieren kann.

7. Feder-/Dämpfereinheit nach einem vorhergehenden Anspruch, in welcher genannte Lastzuteilungsvorrichtung eine Vorrichtung (84) zur Erzeugung von Kraftbefehlen aufweist, welche den von den einzelnen lasttragenden Vorrichtungen zu erzeugenden Kräften entsprechen, sowie eine Vergleichseinrichtung, um genannte Befehlskräfte mit den von genannten lasttragenden Vorrichtungen tatsächlich erzeugten Kräften zu vergleichen und ein auf genanntem Vergleich beruhendes Fehlersignal zu erzeugen, sowie eine Reguliervorrichtung zur Regulierung genannter Kraftbefehle, so daß genannte Kraftbefehle so reguliert werden können, daß die genannten tatsächlichen Kräfte den genannten Kraftbefehlen entsprechen.

8. Feder-/Dämpfereinheit nach Anspruch 7, in welcher genannte Reguliervorrichtung eine Vorrichtung zur Erzeugung eines gewünschten Kraftsignals durch Umwandeln genannten Fehlersignals in ein Signal mit Bestandteilen, die proportional zur Größe des genannten Fehlersignals und zu seiner Zeitableitung und seinem Zeitintegral ist.

9. Feder-/Dämpfereinheit nach Anspruch 7 oder 8, wobei genannte Lastzuteilungsvorrichtung außerdem eine Vorrichtung enthält, die auf genannte Höhensignale zur Bestimmung der vertikalen Geschwindigkeit des genannten Fahrwerks reagiert, sowie eine Vorrichtung, die genannte erste lasttragende Vorrichtung als Generator funktionieren läßt, der die Energie der genannten Energiequelle zuführt, wenn die Richtung von genanntem Kraftbefehl und die Richtung genannter vertikaler Geschwindigkeit entgegengesetzt sind, die aber genannte erste lasttragende Vorrichtung als Motor arbeiten läßt, wenn die Richtungen genannter Geschwindigkeit und genannten Kraftbefehls gleich sind.

10. Feder-/Dämpfereinheit nach Anspruch 7, in welcher genannte Lastzuteilungsvorrichtung genannte Kraftbefehle erzeugt, so daß die Summe der Kräfte, die von mehreren Feder-/Dämpfereinheiten erzeugt werden, bei denen genannte lasttragende Vorrichtung verwendet wird, ungefähr gleich dem relativ invariablen Bestandteil der Last ist, die zur Beibehaltung einer gewünschten Fahrzeugneigung erforderlich ist.

**Revendications**

1. Suspension active à énergie électrique pour un véhicule, comprenant :

un ensemble (10) formé par une roue et par un pneu;

une unité de suspension à énergie électrique (12) fonctionnellement apte à produire entre ledit ensemble et le châssis (18) du véhicule une force en réponse à des forces extérieures entrantes qui agissent sur ledit ensemble et sur ledit châssis, ladite unité comprenant des premiers et des deuxièmes moyens porteurs de charge interposés entre ledit ensemble et ledit châssis, lesdits premiers moyens porteurs de charge comprenant un moteur électrique (52) destiné à fixer la position dudit ensemble par rapport audit châssis, et lesdits deuxièmes moyens porteurs de charge comprenant un ressort (16, 58) ;

des moyens (54, 66) pour capter les forces extérieures qui agissent en vue de provoquer un déplacement vertical dudit ensemble par rapport audit châssis, lesdits moyens capteurs comprenant des moyens (54, 66) qui captent la charge et qui sont destinés à capter les forces porteuses de charge engendrées par chacun desdits moyens porteurs de charge (52 ; 16, 58) et à engendrer des signaux correspondant auxdites forces ;

des moyens de détermination de la hauteur (14) pour déterminer le niveau dudit véhicule par rapport au sol, niveau qui correspond à la distance verticale entre ladite roue et ledit châssis, et pour engendrer un signal de hauteur correspondant à un tel niveau du véhicule par rapport au sol;

des moyens de commande (80) pour faire fonctionner ledit moteur électrique afin qu'il agisse sur ladite unité en vue de répondre en temps réel auxdits signaux d'entrée correspondant aux forces extérieures et provenant desdits moyens capteurs (54, 66) pendant que le véhicule est en mouvement, en asservissant ainsi le déplacement vertical, par rapport audit châssis, dudit ensemble formé par la roue et par le pneu ;

lesdits moyens de commande comprenant aussi des moyens de répartition des charges, lesquels répondent auxdits moyens capteurs de charge et de hauteur pour déterminer les composantes desdites charges qui sont plus ou moins variables et qui sont sensiblement invariables, et pour régler la fraction de la charge totale qui est portée par chacun desdits moyens porteurs de charge.

2. Suspension selon la revendication 1, dans laquelle ledit moteur est constitué par un moteur électrique rotatif, celui-ci comportant un induit tournant (42) qui entraîne un engrenage (26, 34) d'une manière telle que le déplacement en rotation dudit induit soit transformé en un déplacement vertical, par rapport audit châssis, dudit ensemble formé par une roue et par un pneu.

3. Suspension selon la revendication 1, dans laquelle ledit moteur est constitué par un moteur électrique linéaire actionné par lesdits moyens de commande et comprenant un induit plongeur (68) et un stator (70) qui sont interposés entre ledit châssis et ledit ensemble formé par une roue et par un pneu, d'une manière telle que le déplacement en glissement dudit induit plongeur par rapport audit stator soit accompagné d'un déplacement vertical dudit ensemble par rapport audit châssis.

4. Suspension selon la revendication 3, dans laquelle ledit induit plongeur (68) est relié fonctionnellement audit châssis, et ledit stator (70) est relié fonctionnellement audit ensemble formé par la roue et par le pneu.

5. Suspension selon l'une quelconque des revendications précédentes, dans laquelle ledit ressort est un ressort pneumatique ou hydraulique (58) qui est monté autour dudit moteur.

6. Suspension selon l'une quelconque des revendications précédentes, comprenant en outre une source d'énergie électrique (88) qui est reliée auxdits moyens de commande (80) et audit moteur électrique d'une manière telle que ladite source d'énergie puisse à la fois alimenter en énergie ledit moteur électrique et absorber de l'énergie provenant de celui-ci.

7. Suspension selon l'une quelconque des revendications précédentes, dans laquelle lesdits moyens de répartition de la charge comprennent des moyens (84) pour produire des instructions relatives aux forces, celles-ci correspondant aux forces qui doivent être produites par chacun desdits moyens porteurs de charge, des moyens de comparaison pour comparer lesdites forces de consigne aux forces réelles produites par lesdits moyens porteurs de charge et pour produire un signal d'erreur à partir de ladite comparaison, et des moyens de réglage pour régler lesdites instructions relatives aux forces d'une manière telle que lesdites instructions relatives aux forces puissent être réglées de façon à amener lesdites forces réelles à devenir égales auxdites forces de consigne.

8. Suspension selon la revendication 7, dans laquelle lesdits moyens de réglage comprennent des moyens pour produire un signal de force de consigne en transformant ledit signal d'erreur en un signal qui présente des composantes proportionnelles à la valeur dudit signal d'erreur, à sa dérivée par rapport au temps et à son intégrale par rapport au temps.

9. Suspension selon la revendication 7 ou 8, dans laquelle lesdits moyens de répartition de la charge comprennent en outre des moyens qui répondent auxdits signaux de hauteur pour déterminer la vitesse verticale dudit châssis, et des moyens pour amener lesdits premiers moyens porteurs de charge à fonctionner comme un générateur fournissant de l'énergie à ladite source d'énergie dans le cas où la direction de ladite instruction relative à la force et la direction de ladite vitesse verticale sont opposées, mais à amener lesdits premiers moyens porteurs de charge à fonctionner comme un moteur dans le cas où les directions de ladite vitesse et de ladite instruction relative à la force sont identiques.

10. Suspension selon la revendication 7, dans laquelle lesdits moyens de répartition de la charge produisent lesdites instructions relatives aux forces d'une manière telle que la somme des forces produites par une pluralité d'unités de suspension utilisant lesdits moyens porteurs de charge soit approximativement égale à la composante relativement invariable de la charge qui est nécessaire pour maintenir un niveau voulu du véhicule par rapport au sol.

FIG.1

FIG.2

FIG.3

FIG.7

18
12
16
18
14
20
10
24

JOUNCE
NOMINAL
time
REBOUND
I

STATIC LOAD

FLUID SPRING
FORCE
0
time
II

A  B
REGENERATION
B  A
+
ELECTRIC MOTOR
FORCE
0
time
–
III

STATIC LOAD

NET FORCE ON
BODY
time
IV

FIG.4

FIG.5

FIG.6

FIG.6A

$I_A$

SHA/ADC

$I_B$ — 112 — SHA/ADC

$I_C$

SHA/ADC

102

120

$\theta_E = 3 \ \theta_M$

$I_Q = 2/3 \ [ I_A \cos \theta_E + I_B \cos (\theta_E - 120^0) + I_C \cos (\theta_E + 120^0)]$

$I_D = 2/3 \ [ I_A \sin \theta_E + I_B \sin (\theta_E - 120^0) + I_C \sin (\theta_E + 120^0)$

$F' = K_1 I_Q$

$\theta_M$ — 114 — MBUS DECODE TO MEMORY

$F'$ — $I_D$

$F_C{}^*$ — 116 — SHA/ADC

$F_M$ — 118 — SHA/ADC

$I_D' = 0$ — 122 — 124 — PID

128 — $F_E$ — PID 130 — $K_2$ 132 — $I_Q{}^*$

126

$I_A{}^* = I_Q{}^* \cos\theta_E + I_D{}^* \sin \theta_E$

$I_B{}^* = I_Q{}^* \cos(\theta_E - 120^0) + I_D{}^* \sin (\theta_E - 120^0)$

$I_C{}^* = I_Q{}^* \cos(\theta_E + 120^0) + I_D{}^* \sin (\theta_E - 120^0)$

$I_{DE}$ — $I_D{}^*$ — $\theta_E$

$I_A{}^*$ — $I_B{}^*$ — $I_C{}^*$

134

D/A — D/A — D/A

EP 0 363 158 B1

19